Europäisches Patentamt

**European Patent Office**

**Office européen des brevets**

(11) Publication number: **0 136 833**

**A2**

(12) # EUROPEAN PATENT APPLICATION

(21) Application number: **84306022.9**

(22) Date of filing: **03.09.84**

(51) Int. Cl.⁴: **A 63 G 31/16**
**G 09 B 9/08**

(30) Priority: **02.09.83 AU 1205/83**

(43) Date of publication of application:
**10.04.85 Bulletin 85/15**

(84) Designated Contracting States:
**DE FR GB IT NL**

(71) Applicant: **BOLWELL DEVELOPMENTS PTY. LTD.**
**Wells & Boundary Roads**
**Mordialloc Victoria 3195(AU)**

(72) Inventor: **Bolwell, Campbell Robert**
**Browns Road**
**Cranbourne South Victoria(AU)**

(74) Representative: **Keltie, David Arthur et al,**
**Baron & Warren 18 South End Kensington**
**London W8 5BU(GB)**

(54) Simulator device.

(57) A simulator, particularly a flight simulator, having a riding position for a user 11, the simulator being mounted on a plurality of actuating means 30,31,32 each of which can move upwardly and/or downwardly under control of a joystick 60 and being located relative to a base by a number of tie rods 40,41,42, the arrangement being such that, on operation of the joystick, so the appropriate actuator means 30,31,32 vary in length and the simulator provides movement which is directly related to the operations by the user.

_FIG. 1._

_FIG. 2._

Croydon Printing Company Ltd.

"SIMULATOR DEVICE"

This invention relates to simulator devices and, in particular, to fixed amusement ride devices which provide an impression of flight simulation and, specifically, to such devices which are coin-freed.

There have been proposed many different forms of amusement rides but, effectively, all of these have suffered from the disadvantage that the user has no operating control over the operation of the device or, if there is control, the control is exceptionally limited. For example, most model car or aeroplane type rides have some mechanism where there is vibration or rocking of the ride and usually the device has a steering wheel or joystick which can be manipulated by the user, but which has a no operative effect on the ride itself.

It is an object of the present invention to provide a simulator device in which the user has operative control of the device.

The invention, in its broadest aspect, provides a simulator device, including a riding position for a user, a plurality of actuating means whereby the position of the device relative to a base can be varied and control means which can be manipulated by the user characterised in that manipulation of the control means effects variation in the condition of the actuator means whereby there is a movement of the device which directly relates to the operation by the user.

In one particular form of the invention the simulator may be a rocket ship or aeroplane and the control means may be a joystick, by manipulation of which the attitute of the device can be varied.

In, a particular form of the invention there may be provided three actuators, by

0136833

variation of the positions of which, so the attitude of the device can be varied within predetermined limits, the control device, on movement, causing actuation of one or more switches, which switches, either directly or indirectly, control the position of the actuators.

The device is preferably coin-freed and the period of the ride may be fixed or can vary with changes in particular parameters.

In order that the invention may be more readily understood, we shall describe the invention in relation to particular forms of device illustrated in the accompanying drawings, in which:

Fig. 1    is a side elevation of a first form of simulator made in accordance with the invention;

Fig. 2    is a rear perspective of the simulator of Fig. 1 in its normal operative condition and showing the actuators extended;

Fig. 3    is a perspective view of a second form of simulator;

Fig. 4    is a front perspective view of a still further form of simulator;

Fig. 5    is a front perspective showing the relative location of the actuators and tie rods, in their operative position but with the simulator removed;

Fig. 6    is a plan view similar to Fig. 5, that is with the simulator removed, showing the relative locations of the actuators and tie rods;

Fig. 7    is a schematic side elevation showing the location of the actuators in dive mode;

Fig. 8    is a view similar to Fig. 7 showing the actuators in climb mode;

Fig. 9    is a front elevation showing the actuators in one bank mode;

Fig. 10   is a view similar to Fig. 9 showing the opposite bank mode;

Fig. 11   shows the arrangement of one form of joystick and actuator operating means;

Fig. 12   shows a second embodiment of joystick and actuator operating means; and

Fig. 13   shows a third embodiment of joystick which also shows a different form of connecting bush.

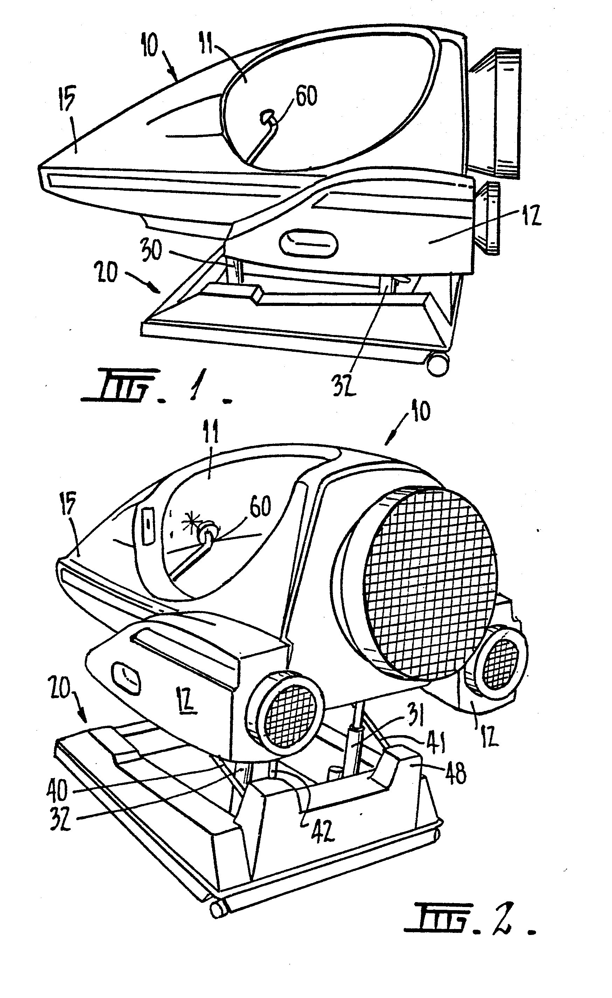

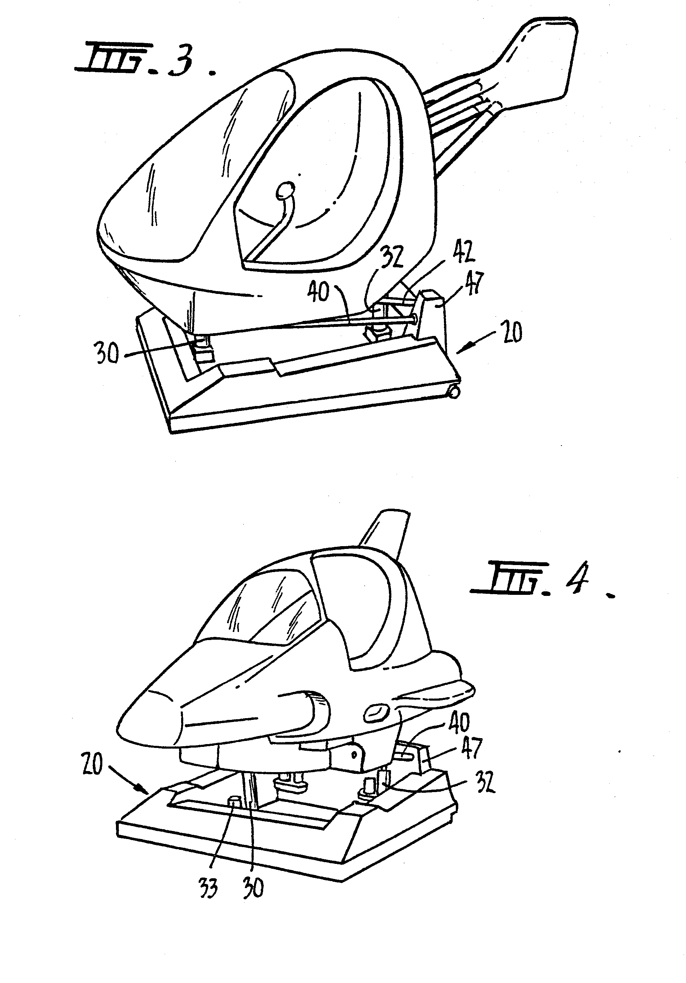

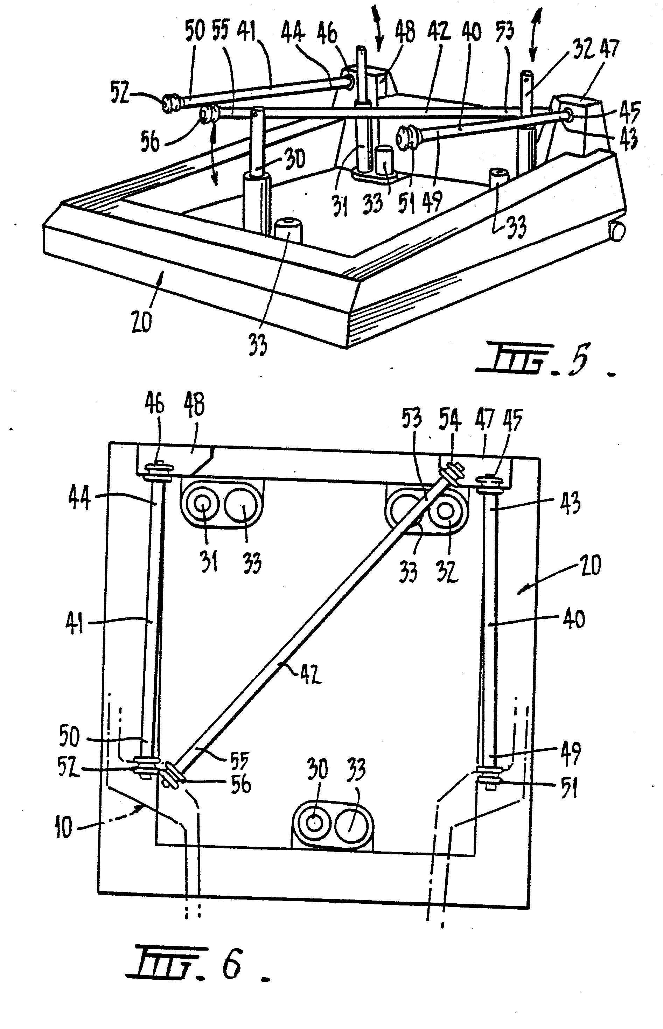

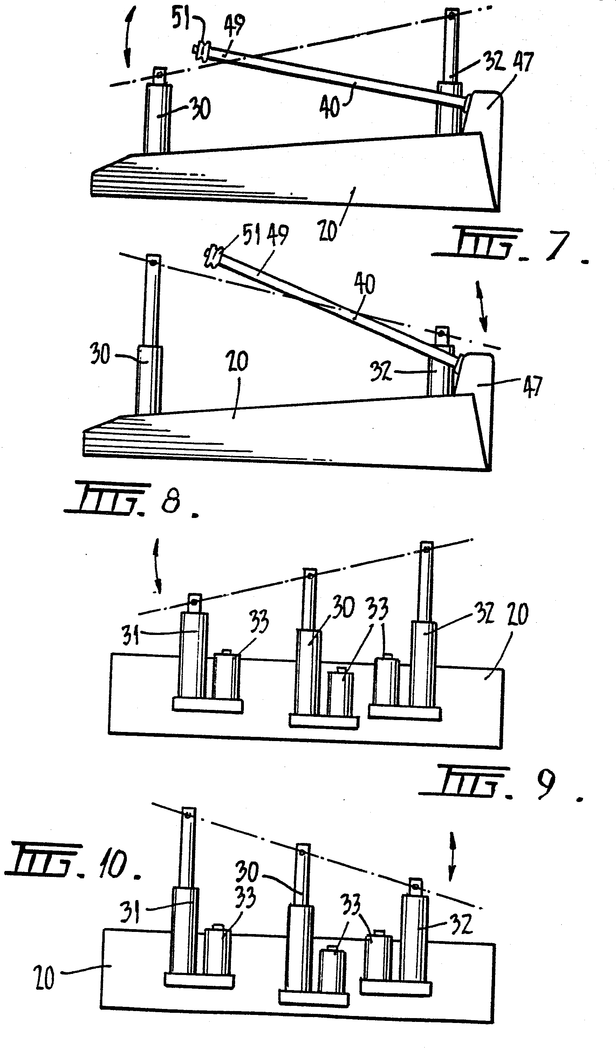

The embodiment of Figs. 1 and 2, which will be referred to, generally, as an earth module, illustrates the arrangement of the concept of the invention and the helicopter of Fig. 3 and fighter of Fig. 4 are shown simply to demonstrate that the invention can be applied to a wide range of shapes.

Referring to Figs. 1 and 2, the earth module, the module 10 may be of a shape generally associated with such devices, that is having a tapered nose 15 in the front of a cockpit 11 and with pods for "rocket engines" 12 mounted on each side thereof and to the rear thereof.

The module 10 is located on a fixed base 20 which may be provided with wheels, whereby the device can be moved readily when one end is lifted but, when the base is located on the ground, it is stable.

The base may have a metal frame which can be covered by sheet metal or fibreglass panels and the module is preferably framed and its skin is formed from fibreglass. The actual form of construction of the module 10 and the base 20 will not be fully described as being known in the art.

The interconnection between the base and the module is preferably by three actuators 30, 31, 32, one actuator 30 being axially located on the centre line of the module and forward of the centre of gravity thereof and the other two actuators 31, 32 being spaced equidistantly from the central axis and being adjacent the rear of the module.

The actuators may be mechanical and may be screw operated or may be hydraulic or pneumatic in operation.

In their fully retracted position, as illustrated in Fig. 1, the actuators locate the module in a substantially horizontal position and relatively closely adjacent the base. If required, the module, at this position, may rest upon the base or extensions therefrom.

This is the normal rest position of the module and enables relatively simple access to the cockpit.

The location of the module 10 relative to the base is achieved not only by the actuators 30, 31, 32 but by tie rods 40, 41, 42. The tie rods 40, 41 are parallel to the axis of the module and, at their rearmost end 43, 44, are connected, by way of bushes 45, 46, to extensions 47, 48 from the base. At their forward ends 49, 50, they are connected by means of bushes 51, 52 to portion of the module.

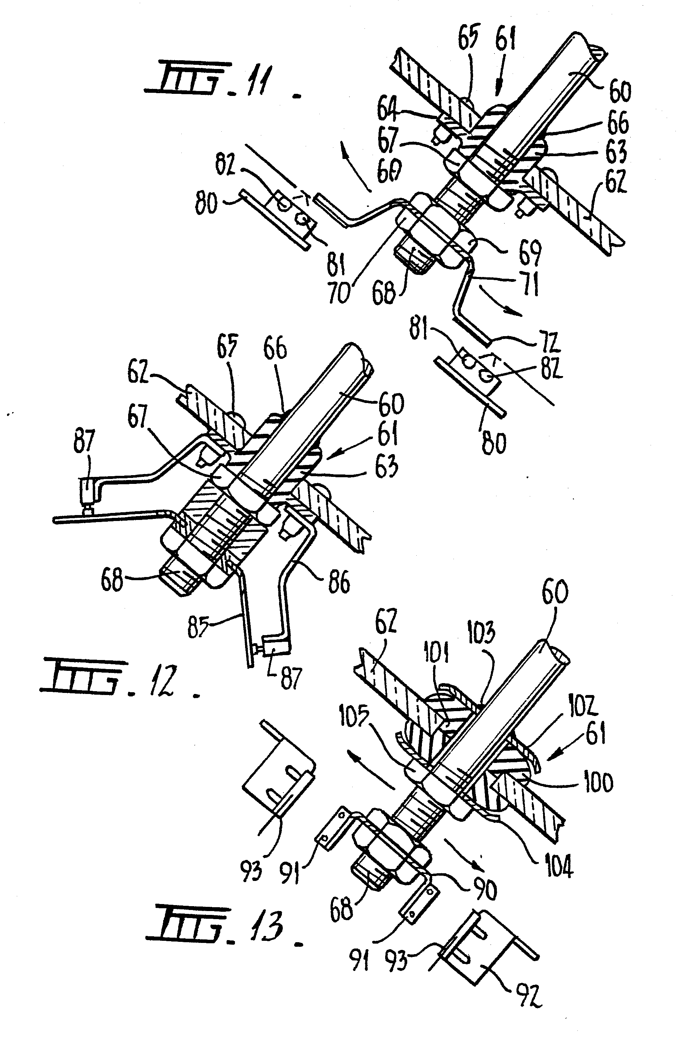

This arrangement can best be seen from Figs. 5 and 6 as, although the module is not shown in these Figs., the arrangement of the tie rods are readily identified.

The third tie rod 42 is connected at its rearward end 53 by means of bush 54 to the extension 47 to which tie rod 40 is connected and, at its forward end 55, by means of bush 56 to the module.

It will be seen from examination of the location of these, and particularly from examination of Fig. 6, that a triangular strutting arrangement is provided so that, whilst the module can move upwardly and downwardly and sideways, as will be described further hereinafter, it is, at all times maintained with its longitudinal axis constant and, thus, there is provided a good and substantial location of the module.

Within the cockpit 11 there is located a seat and there is provided a joystick 60, the operation of which will be described more fully hereinafter, which may be provided with a firing button thereon and a throttle which can be adjacent to the hand of a user when seated in the cockpit.

Mounted in front of the seat, against what would be the bulkhead of the cockpit, there may be displays, which can preferably be LED displays, but which could be in the form of a CRT or liquid crystal display and, again, the operation of these displays will be described hereinafter.

At the rear of the module the portions representing the exhausts from the rocket engines can be internally illuminated and the illumination may be selective and can depend upon the position of the throttle and/or joystick and there may be provided certain flashing marker lights or the like which can operate continuously or intermittently as desired.

Adjacent the side of the cockpit, or any other position relatively accessible to the user, there is a coin receiving mechanism whereby, on insertion of a required number of coins, the mechanism can be freed and the simulator operated.

The possible orientations of the module relative to the base are illustrated in Figs. 7 to 10, but before fully describing these we shall again consider the arrangement of Figs. 5 and 6.

In the illustrated embodiment, each of the actuators 30, 31, 32 can be considered to be screw type mechanical actuators having an associated motor 33. Such actuators and motors are known and will not be described further herein but, as previously mentioned, if required, the mechanical actuators could be replaced by hydraulic or pneumatic rams.

The normal rest position of the module, as illustrated in Fig. 1, is with the actuators retracted and the arrangement is then such that even a relatively small child can readily climb into the cockpit of the module.

When the coin freed mechanism permits operation, that is after the receipt of the required coins, the actuators are operated and the module is raised to its highest position, which can be seen in Fig. 2 and which is the position illustrated in Fig. 5.

It will be seen that in moving to this position not only are the actuators extended but the tie rods 40, 41, 42 move about their rear ends 43, 44, 53 so that the module maintains its location relative to its longitudinal axis.

It will be appreciated that the bushes at each end of these members permit a certain amount of longitudinal deflection as, in this raised condition, the effective length of the tie rods, to maintain the module in its position relative to the actuators, needs to be slightly longer than when in the lowered position.

As will be described more fully hereinafter, the joystick 60 is provided with four switches about its periphery and it will be appreciated that in its rest position none of these switches is actuated and then it is possible either to actuate any one of the switches by moving the joystick either directly forwardly or rearwardly or to one side or the other, or to actuate any two of the switches, when the joystick is moved in a diagonal direction.

The possible positions are illustrated in Figs. 7 to 10.

In Fig. 7 the joystick has been pushed forward, the actuator 40 has been lowered and the actuators 31, 32 maintain their extension so the module has a downward attitude.

The tie rods, in this condition, are substantially in the position that they are when the module is in its rest position, as the forward end of the module, to which the tie rods are connected is effectively in this position.

When the joystick is brought back to its rest position, that is when the switch previously actuated is released, the actuator 30 extends to its original position and, if the joystick is brought further rearwardly, then the actuators 32, 33 are lowered and the module assumes an upward attitude, a climb mode. This is illustrated in Fig. 8.

When the joystick is moved to the right, the actuator 31 lowers and the actuators 30, 32 remain extended so that a right hand bank is achieved. This is illustrated in Fig. 9, and it must be kept in mind that this figure is a front view of the arrangement.

On the converse, that is the joystick is moved to the left, then actuator 32 lowers and a left bank is achieved.

In the intermediate position, two of these modes can be effected at the same time so that a banking climbing or banking diving turn can be simulated.

It will be seen that, with actuators that operate at a relative fast rate, so the simulator of the invention can be rapidly moved from one position to another giving a very accurate simulation of movement with high speed variations.

Although not illustrated, we do prefer to provide switch means on the actuators to act as limit switches to protect the actuators and this may be done either by microswitches which are contacted by moveable parts of the actuator or by light operated switches or in other ways.

Figs. 11, 12 and 13 show different possible arrangements of the joystick.

In each case, the joystick 60 is associated with a bush, shown generally at 61, which is in an aperture in a bulkhead or the like 62, through which the joystick 60 passes.

The bulkhead 62 may be on the floor or be extending from the module and may be of relatively thick fibreglass material so that there is substantial strengt

As will be described more fully later, the bush 61, shown in Fig. 13, is different from the bushes shown in the other two figures.

In each case, however, the arrangement is such that the bush 61 provides a pivot for the joystick 60 whereby the joystick may be moved in any required direction.

In the embodiment of Fig. 11, the bush 61 comprises a rubber bushing 63 to which there is permanently connected a metal flange 64. This flange is affixed to the bulkhead 62 by bolts 65.

The portion of the joystick passing through the bushing 63 may be shaped or may be treated, as illustrated, by the addition of some weld material 66 to prevent or restrict rotation of the joystick relative to the bush.

A lock nut 67 may be provided on the lower end 68 of the joystick, which is threaded, to clamp the joystick assembly in the bush.

In this embodiment we connect to the lower end, and between a pair of lock nuts 69, 70, a metallic disc 71, the lower annular surface 72 of which may be mirrored or polished.

Located relative to this disc 71, we provide four mounting plates 80, two of which lie along the longitudinal axis of the module, and specifically the longitudinal axis of the joystick 60, and the other two of which are at right angles to these two.

Each plate has a light source 81 and a light sensitive device 82, which are normally shielded from each other and the light sensitive device is arranged so as to be inoperative under normal ambient light conditions.

When the joystick is moved so that the reflecting surface 72 at least partially overlays the area between the light source 81 and the receptor 82, the light from source 81 is reflected from the surface 72 to the receptor 82 which is actuated to open or close a circuit and which causes initiation of operation of the appropriate actuator, or actuators if two receptors are operated at the same time.

As soon as the joystick moves towards its rest position, the reflective surface 72 moves from a position where it effects the reflection of the light from the source 81 and the actuator is de-actuated and automatically returns to its extended position.

It will be seen that the arrangement illustrated is satisfactory for relatively vigorous use as there is no direct contact between the switching means and the joystick and, thus, the only mechanical damage which can occur would be in the bushing 63.

In the embodiment of Fig. 12 we have, instead of the reflecting surface, a downwardly flared conical member 85 and we also provide an outer conical member 86 which is connected by the bolts 65 to the bulkhead 62. This outer conical member 86 is thus fixed relative to the bulkhead.

Located around the periphery of this conical member 86 there are four microswitches 87 and the location of these is the same as the location of the light sources and receptors of the previous figure.

The arrangement here is that, when the joystick is moved, the cone 85 moves towards one or more of the microswitches 87 and the switches are closed by the contact and this causes the actuation of the actuator members.

Again, it will be seen that, depending on the position of the joystick so one or more actuators will be actuated.

The embodiment of Fig. 13 shows a different switching means.

In this embodiment there is a spider or the like 90 attached to the lower end of the joystick, which spider has located about its periphery four magnets 91.

Again, two of these magnets lie in the longitudinal central plane of the module and the other two are at right angles thereto.

Mounted about the magnets there are four adjustable brackets 92, each of which has a reed switch 93 attached thereto. These reed switches can either be normally open or normally closed and, when the joystick is moved and magnet 91 comes into proximity with its reed switch 93, the reed switch is caused to switch and the appropriate actuator or actuators are caused to operate.

Again, it will be seen that this arrangement is satisfactory mechanically in that there is no contact between the magnets and the reed switches so these is no possibility of mechanical damage can arise. Rather than using four magnets a single magnet, such as a ring magnet, could be used to give the same result.
As mentioned, the embodiment of fig. 13 also differs from the earlier embodiments in that it shows a different form of bushing. In this form there are a pair of donut bushing members 100 and each of these may have a square extension 101 which enters into a square aperture in the bulkhead 62 so that the bushing is prevent from rotation therewith and, if required, the central aperture may also be formed square to receive either a formed end of the joystick 60 or to make a tight fit therewith so that the joystick cannot readily rotate relative to the bushing 100.

It may be that we prefer to arrange two of the corners of the square extension of the bushing along the longitudinal axis of the module to give improved control of the movement of the joystick.

Mounted on the joystick and on the cockpit side of the bulkhead 62 there is a preferably curved plate 102.

As illustrated, this plate is welded at 103 to the joystick but may be otherwise connected thereto.

A similar plate 104 is located on the other side of the bulkhead and this may be held in position by a lock nut 105 or the like.

It will be seen that these two plates, when the joystick is in the rest position illustrated, may only be in contact with the bush over a small area and thus the force necessary to deflect the joystick is only slight. However, as the deflection of the joystick increases, so the area of contact of the plates 102, 104 with the bushing increases and more force is needed to effect deflection.

This means that the device is particularly suitable for a wide range of users, in that a small child can readily cause sufficient deflection of the joystick for operation but, even a large child or adult, cannot cause damage by over deflection of the joystick as this is prevented by the increase in pressure needed for additional movement as the total movement is increased.

In operation, when sufficient coins have been fed to the mechanism, the system is enabled and the actuators cause the module to move upwardly relative to the base until they are fully extended.

This movement gives the impression of take-off.

At this time, if the joystick is moved directly rearward, the rearward switch is operated, the forward actuator 30 is lowered and the nose of the module becomes lowered, as illustrated in Fig. 7, giving a dive impression.

If the joystick is released it returns to its central position, the switch is released and the forward actuator 30 will rise.

If the joystick is drawn rearwardly, both of the rear actuators 32, 33 will lower and a climb simulation, as illustrated in Fig. 8, will be achieved. Again, on release of the joystick, the actuators will return to their extended position.

If the joystick is moved directly to one side, the appropriate rear actuator will lower and a bank condition will be achieved. This is the condition of Figs. 9 and 10.

Any intermediate position will cause there to be a combination of these movements so it will be appreciated that within the angles permitted by the degree of extension of the actuators, so any attitude of the module can be achieved.

It will be seen that the simulator of the invention thus permits a direct reflection of the position of the joystick in the attitute of the module and, thus, good flight simulation can be obtained.

The effect of this can be increased by the provision of a turn and bank indicator in the display panel, which can be achieved by a pendulum which provides a bar across a scale. Alternatively, we would use a pendulum switching one or more LED's or other display devices. A rate of climb indicator could be provided which indicator can be actuated by a pendulum moving along the longitudinal axis of the device, preferably with a horizontal display

Thus the user can deliberately alter the attitude of the module and, not only will the module adopt the attitude required, but there can be a direct visual indication of attitude.

In order to increase this effect we prefer to provide sound effects which can be directly related to some other aspects, for example, movement of the throttle can initiate a noise simulating rocket noise and this can increase or decrease depending upon the degree of movement.

We may provide on the display panel a gun sight which may be operated by LED's or the like which can, if required, have an independent indication of an alien vessel which can be brought into the centre of the sight by movement of the joystick and use of the joystick firing button can effect the display on the device to indicate a hit or miss on the target and it is, again, preferred, that a sound generator be provided to give an indication of this.

We may also provide a voice tape which runs during operation to provide a background noise of a signal or control. Alternatively, spoken instructions can be generated from an IC chip.

It is also possible to provide further instruments on the display and one which could readily be provided would be a fuel gauge which would show full when the coins were inserted and which would drop during flight, either on a purely time based system or a system dependent upon the throttle opening until, when the fuel is expended, so the ride terminated and the actuators lower the module to its rest position.

It will be seen that the device of the invention provides an exciting and accurate simulation of flight in a manner which is basically simple and can readily be sturdily manufactured and easily maintained.

Whilst we have described the invention fully in relation to an earth module, it will be appreciated that effectively identical mechanical and electronic components can be used to simulate a helicopter, as illustrated in Fig. 3, or a fighter aircraft, as illustrated in Fig. 4, and, depending upon the application, so the form of control device can be varied and the display can also vary to be appropriate for the type of vehicle being simulated. It will also be understood that the particular form and operation of the actuators may vary widely, as can the form of location of the microswitches about the control panel. For example, whilst we have described three actuators giving varied movement of the module, a larger number of actuators could be used if required and, whilst we have described the actuators as initially moving to their extended position, they could initially remain in the lower or assume an intermediate position if this should be required.

Also, whilst we have described the module as being basically of fibreglass, this could be of any other plastics material or could be fabricated from metal or wood.

-12-                                    0136833

CLAIMS:

1. A simulator device, including a riding position for a user, a plurality of actuating means whereby the position of the device relative to a base can be varied and control means which can be manipulated by the user characterised in that manipulation of the control means (60) effects variation in the condition of the actuator means (30,31,32) whereby there is a movement of the device which directly relates to the operation by the user (11).

2. A simulator device as claimed in claim 1 characterised in that there are three actuating means (30,31,32) defining the corners of an isoscles triangle.

3. A simulator device as claimed in claim 1 wherein the actuating means (30,31,32) are at the corners of an equilateral triangle.

4. A simulator device as claimed in claim 1 characterised in that the device is connected to the base (20) by means of the actuating means (30,31,32) and by means of tie rods (40,41,42) one end of each of which is connected to the simulator device and the other end to the base.

5. A simulator device as claimed in claim 4 wherein there are three tie rods (40,41,42), two of which, in plan, are parallel to the longitudinal axis of the device and the third of which is effectively a diagonal of the said two.

6. A simulator device as claimed in claim 4 wherein at each point of connection of the tie rods (40,41,42) there is means whereby the tie rod can partially rotate relative to that to which it is connected.

7. A simulator device as claimed in claim 1 characterised in that the control means comprises a joystick (60) which can, on movement, cause the operation of any one or two of four switches located about the movement of the joystick, means being provided so that on any switch being closed, so an actuator or actuators is operated to provide movement of the simulator device corresponding to the position of the joystick.

8. A simulator device as claimed in claim 7 wherein the joystick (60) passes through (61) an aperture and is connected therewith by a resilient bush, the bush providing a pivot about which the joystick can move.

9. A simulator device as claimed in claim 8 wherein the bush comprises two donut shaped members (100), one located on each side of the aperture and wherein the joystick (60) has a plate (102,104) on each side of the bush (61) and so located that adjacent the centre of movement the area of contact of the plates (102,104) with the bush is relatively slight so resistance to movement in the joystick is minimal but as the joystick is moved from this position so the area of the plates in contact with the bush increases so that the amount of movement for a particular applied force decreases.

10. A simulator device as claimed in claim 7 characterised in that the joystick (60) has a plate (71) at or adjacent its lower end and a plurality of light sources (81) each with an associated detector (82) so arranged that as the plate is moved from its rest position, because of movement of the joystick, so light from at least one light source strikes the plate and is reflected to the associated detector(s), receipt of reflected light effecting the initiation of operation of at least one actuator (30,31,32).

11. A simulator device as claimed in claim 7 characterised in that the joystick is provided with an extension (85) adjacent its lower end and a plurality of switches (87) so located relative to the extension so that, as the extension is moved from its rest position, because of movement of the joystick (60), so the extension contacts at least one switch, the operation of the switch(es) effecting the operation of at least one actuator.

12. A simulator as claimed in claim 11 wherein the extension is in the form of a cone (85) flaring downwardly and outwardly from the joystick (60) and wherein the switches are microswitches (87) located about the periphery of the cone.

13. A simulator as claimed in claim 7 characterised in that the joystick is provided with a magnet or a series of magnets (91) about its lower end and a number of reed switches (93) each in proximity of the or one magnet so that, as the magnet or magnets are

moved from their rest position, as a result of the movement of the joystick, (60) so at least one reed switch is approached by the or a magnet causing the switch(es) to operate effecting the operation of at least one actuator (30,31,32)

FIG. 1.

FIG. 2.

FIG.3.

FIG.4.

315

_FIG. 5._

_FIG. 6._

415

0136833

FIG. 7.

FIG. 8.

FIG. 9.

FIG. 10.

0136833

FIG. 11.

FIG. 12.

FIG. 13.